## Europäisches Patentamt

## European Patent Office

## Office européen des brevets

(11) Veröffentlichungsnummer: **0 109 596**

**B1**

(12) **EUROPÄISCHE PATENTSCHRIFT**

(45) Veröffentlichungstag der Patentschrift:
12.08.87

(21) Anmeldenummer: 83111059.8

(22) Anmeldetag: 05.11.83

(51) Int. Cl.⁴: **F 02 F 1/24, F 02 F 7/00,
F 16 M 1/02, F 16 M 1/021,
F 16 M 1/025**

(54) **Hubkolbenbrennkraftmaschine.**

(30) Priorität: 18.11.82 DE 3242498

(43) Veröffentlichungstag der Anmeldung:
30.05.84 Patentblatt 84/22

(45) Bekanntmachung des Hinweises auf die Patenterteilung:
12.08.87 Patentblatt 87/33

(84) Benannte Vertragsstaaten:
**CH DE FR GB LI NL**

(56) Entgegenhaltungen:
**DE-A-1 961 804
DE-C-470 388
FR-A-861 250
FR-A-895 692
FR-A-1 246 475
US-A-3 046 952**

**Prospekt Fa. Ruston Paxmann (Publication No. 231)
Nov. 1970**

(73) Patentinhaber: **M.A.N. - B&W Diesel GmbH,
Stadtbachstrasse 1, D-8900 Augsburg 1 (DE)**

(72) Erfinder: **Pfleiderer, Ernst, Heidestrasse 25 1/2,
D-8901 Königsbrunn (DE)**
Erfinder: **Lochbichler, Wolfram, Alpenstrasse 25,
D-8900 Augsburg (DE)**

## Beschreibung

Die Erfindung betrifft eine Hubkolbenbrennkraftmaschine der im Oberbegriff des Anspruches 1 angegebenen Art.

Eine solche Hubkolbenbrennkraftmaschine ist aus dem Prospekt der Fa. Ruston Paxmann betreffend die Maschine Ruston AO Two-Stroke Diesel 3000/8000 BHP, Publication No. 231 (2nd revision) vom Nov. 1970 bekannt. Diese bekannte Hubkolbenbrennkraftmaschine besitzt ein aus Stahlguß hergestelltes Maschinengestell. Die Kurbelwelle ist hängend über von unten her an das Maschinengestell angesetzte Lagerdeckel gelagert. Als Grundlagerschrauben sind dabei Stiftschrauben verwendet, die in Sacklochgewindebohrungen im Lagerstuhl eingeschraubt sind. Die Zylinderkopfschrauben sind ebenfalls als Stiftschrauben ausgebildet und in den Obergurt des Maschinengestelles in entsprechende Sacklochgewindelöcher eingeschraubt. Bei dieser Art der Befestigung der Lagerdeckel und Zylinderköpfe sind Gußanhäufungen im Bereich der Sacklochgewindebohrungen notwendig, was üblicherweise zu relativ schwierigen Gußformen führt und die Ausschußgefahr erhöht. Da durch die Anordnung der Schraubverbindungen die einzelnen Maschinengestellteile nicht nur auf Druck, sondern beim Arbeitstakt durch die hohen Zünddrücke auch auf Zug beansprucht werden, muß das Maschinengestell aus hochwertigem Gußmaterial - dort Stahlguß - hergestellt sein. Einfacher Grauguß würde den auftretenden Belastungen bei dieser Konstruktionsweise der Hubkolbenbrennkraftmaschine nicht standhalten können. Insbesondere die Tragfähigkeit der Sacklochgewinde, die die Stiftschrauben für die Lagerdeckelbefestigung und Zylinderdeckelbefestigung aufnehmen, würde für eine sichere Beherrschung der auftretenden Kräfte nicht ausreichen.

Um nun aber trotzdem billiges Gußeisen für die Fertigung des Maschinengestells von Großmaschinen mit über 400 Millimeter Zylinderdurchmesser verwenden zu können, wurde bisher immer das Bauprinzip mit einer hängend über von unten frei zugänglich an das Maschinengestell angesetzte Lagerdeckel gehaltenen Kurbelwelle verlassen und das Bauprinzip der sogenannten Tunnellagerung aufgegriffen. Dieses Prinzip ist beispielsweise in der DE-C-470.388 oder in der FR-A-895.692 realisiert worden. Dabei besteht das Maschinengestell regelmäßig aus mehreren Teilen, die durch durchgehende Zuganker miteinander verbunden sind. Die Kurbelwelle ist dabei in der Grundplatte in entsprechenden, nach oben offenen Lagerhalbschalen gelagert. Diese Lagerhalbschalen werden durch von oben her aufgesetzte Lagerdeckel zu vollständigen Kurbelwellenlagern ergänzt. Die Montage und Demontage dieser Lagerdeckel erfolgt dabei im Tunnel zwischen Grundplatte und dem darauf abgestützten Maschinengestellteil. Dieses Bauprinzip erweist sich jedoch im Wartungsbereich in mancher Hinsicht als unvorteilhaft. Die hängende Lagerung der Kurbelwelle weist demgegenüber entscheidende Vorteile auf. Zum Beispiel können, wenn die Lager ausgeschlagen sind und durch neue ersetzt werden sollen, die Lagerdeckel leicht demontiert werden, ohne daß die Kurbelwelle ausgebaut oder in ihrer Einbaulage verändert werden muß.

Es ist daher Aufgabe der Erfindung, für Hubkolbenbrennkraftmaschinen der eingangs definierten Größenordnung ein Bauprinzip vorzuschlagen, durch das gegenüber nach bislang bekannten Bauprinzipien hergestellten Brennkraftmaschinen eine wesentlich kostengünstigere, wirtschaftlichere Herstellung, insbesondere des Maschinengestelles möglich ist, außerdem das Ausschußrisiko bei der Maschinengestellfertigung stark verminderbar, weniger Material erforderlich und damit Gewicht einzusparen ist und über dies sowohl für Erstmontage von Kurbelwelle, Zylinderbuchsen und Zylinderköpfen als auch für Wartungsarbeiten günstige Verhältnisse gewährleistet sind.

Diese Aufgabe ist erfindungsgemäß bei einer Hubkolbenbrennkraftmaschine der eingangs definierten Größenordnung durch die Kombination der in Anspruch 1 angegebenen Merkmale gelöst. Vorteilhafte Ausgestaltungen und Weiterbildungen dieser Lösung sind in den abhängigen Patentansprüchen gekennzeichnet.

Durch den Entfall von großen Gewinden im gegossenen Maschinengestell ergeben sich gegenüber einem konventionellen, zugankerlosen Gestell geringere Gußanhäufungen. Das Gußausschußrisiko sinkt; es ergeben sich fertigungstechnische Vereinfachungen. Gegenüber einem konventionellen mehrteiligen, zugankerzusammengehaltenen Maschinengestell besteht der Hauptvorteil in der Einteiligkeit des Maschinengestells durch den Wegfall bekannt nachteiliger Trennfugen. Durch das Angreifen der zum Zylinderkopf führenden Zuganker am Zwischenboden des Maschinengestells wird am Obergurt desselben eine Reduzierung der auftretenden dynamischen Spannungen erzielt; letzteres deshalb, weil die Beanspruchungen herrührend aus Zugankerspannkraft und Zylinderbuchsenauflagepressung, sowohl auf den Obergurt des Maschinengestells, als auch den Zwischenboden aufgeteilt werden. Da die Zündkräfte weitgehend von den die Lagerdeckel haltenden Zugankern aufgenommen werden und sich deshalb im Gußmaterial des Maschinengestells vergleichsweise geringe dynamische Spannungen ergeben, die außerdem durch die Druckvorspannung in den Bereich höherer Dauerfestigkeitswerte verlagert werden, kann das Maschinengestell gegenüber einem konventionellen zugankerlosen, gegossenen Maschinengestell entsprechend leichter ausgebildet und auch entsprechend einfacheres Gußmaterial verwendet werden. Die Verlängerung der Gewindezapfen zumindest am oberen Ende der Zuganker um ein gewisses Maß über die Muttern hinaus ermöglicht das Ansetzen einer Zugankerspann- bzw. Mutterlösevorrichtung. Dies stellt insbesondere bei Brennkraftmaschinen der gattungsgemäßen Größenordnung einen erheblichen Vorteil dar, weil das Hantieren mit schweren Werkzeugen im Triebraum entfällt. Darüber hinaus ermöglicht das Bauprinzip der Durchgangsbohrungen des Maschinengestells und der Lagerdeckel durchdringenden Zuganker eine relativ einfache Montage der Kurbelwelle.

Nachstehend ist das erfindungsgemäße Bauprinzip für Hubkolbenbrennkraftmaschinen anhand der Zeichnung näher erläutert. In der Zeichnung zeigen:

Fig.1 ein erstes Ausführungsbeispiel einer Hubkolbenbrennkraftmaschine nach dem erfindungsgemäßen Bauprinzip,

Fig.2 ein zweites Ausführungsbeispiel einer Hubkolbenbrennkraftmaschine nach dem erfindungsgemäßen Bauprinzip.

In den beiden Figuren der Zeichnung ist jeweils eine Hubkolbenbrennkraftmaschine teilweise im Schnitt und nur mit jenen Teilen dargestellt, die für das Verständnis der Erfindung erforderlich sind. Die Erfindung ist im Zusammenhang mit einer Hubkolbenbrennkraftmaschine zu sehen, deren Zylinder einen Bohrungsdurchmesser von etwa 400 mm und mehr besitzen und deren Kolben über Pleuel an einer Kurbelwelle angelenkt sind.

In den Figuren sind gleiche bzw. einander entsprechende Teile mit gleichen Bezugszeichen angezogen. Mit 1 ist dabei ein Maschinengestell und mit 2 dessen Obergurt bezeichnet. Das Maschinengestell 1 weist erfindungsgemäß etwa in Höhe seiner biegeneutralen Zone einen Zwischenboden 3 auf, dessen Unterseite mit 4 bezeichnet ist.

Entsprechend einem weiteren Kriterium der Erfindung ist das Maschinengestell 1 einteilig und aus einfachem Grauguß, beispielsweise solchem der Bezeichnung GG 25 oder GG 20, gegossen. Darüber hinaus ist - ebenfalls erfindungsgemäß - die Kurbelwelle 5 hängend über von unten her angesetzte Lagerdeckel 6 am Maschinengestell 1 gelagert. Hierzu weist letzteres oberhalb seiner mit 7 angezogenen Grundplatte im Kurbelraum Einbuchtungen mit seitlichen Anlageflächen 8, 9, 10 und 11 sowie beiderseits einer oberen Kurbelwellenlagerhälfte 12 zueinander fluchtende obere Anlageflächen 13, 14 auf. An diesen Anlageflächen 8, 9, 10, 11, 13 und 14 liegen die Lagerdeckel 6 mit ihren Seitenflächen 15, 16 sowie mit ihrer senkrecht zu den Seitenflächen 15, 16 stehenden Oberseite 17 derart an, daß sich die in den Lagerdeckeln 6 befindlichen unteren Kurbelwellenlagerhälften 18 mit der jeweils zugehörigen oberen Kurbelwellenlagerhälfte 12 ergänzen.

Entsprechend einem weiteren erfindungsgemäßen Kriterium weisen die Lagerdeckel 6 zu ihrer Befestigung am Maschinengestell 1 ebenso wie dieses keine Gewinde sondern jeweils zueinander fluchtende Durchgangsbohrungen 19 und 20 zur Hindurchführung von Zugankern 21 auf. Letztere durchdringen dabei erfindungsgemäß die Durchgangsbohrungen 19 und 20 vollständig und tragen an jedem Ende auf Gewindezapfen 22, 23 je eine Mutter 24, 25; dabei stützt sich die auf dem Gewindezapfen 22 sitzende obere Mutter 24 an einer Anlagefläche 26 an der Oberseite des Obergurtes 2 am Maschinengestell 1, die am Gewindezapfen 23 sitzende untere Mutter dagegen an einer Anlagefläche 27 an der Lagerdeckelunterseite ab.

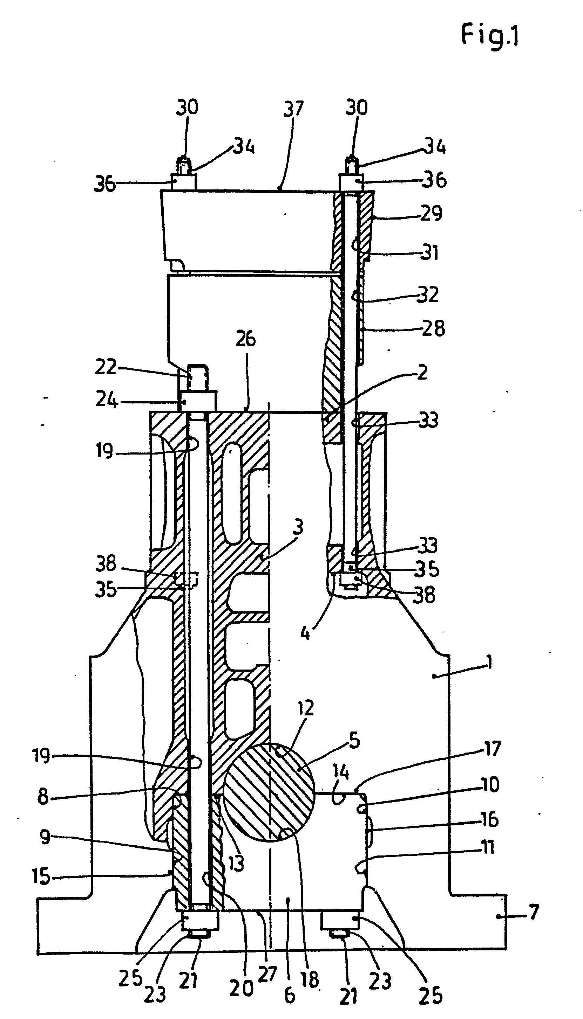

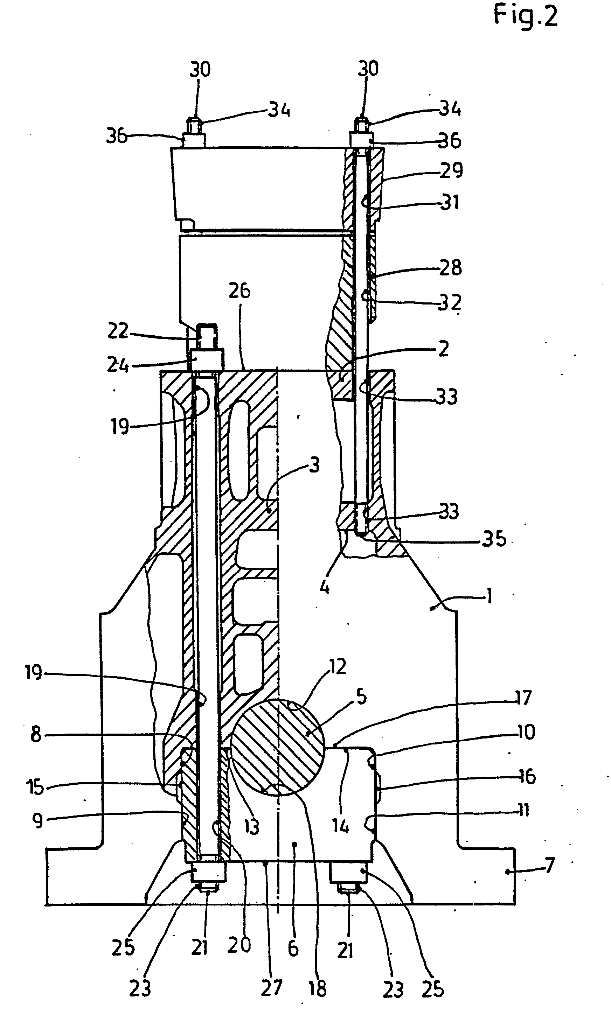

Entsprechend einem weiteren Merkmal der Erfindung sind die mit 25 bezeichneten Zylinderbuchsen durch oben aufgesetzte Zylinderköpfe 29 ebenfalls über Zuganker 30 am Maschinengestell festgelegt, wobei die Zuganker 30 ebenfalls Durchgangsbohrungen 31 in den Zylinderköpfen 29, 32 in den Oberteilen der Zylinderbuchsen 28 und 33 im Maschinengestell 1 durchdringen sowie an ihren oberen und unteren Enden jeweils einen Gewindezapfen 34 bzw. 35 aufweisen, von denen zumindest die oberen (34) Muttern 36 tragen. Letztere stützen sich an Anlageflächen 37 an der Oberseite der Zylinderköpfe 29 ab. An ihren unteren Enden sind die Zuganker 30 erfindungsgemäß am Zwischenboden 3 des Maschinengestells 1 axial festgelegt. Beim Ausführungsbeispiel gemäß Fig.1 durchdringt dabei jeder Zuganker 30 die zugehörige, auch den Zwischenboden 3 durchsetzende Durchgangsbohrung 33 und trägt auf seinem unteren Gewindezapfen 35 eine Mutter 38, die sich an der Unterseite 4 des Zwischenbodens 3 abstützt. Beim Ausführungsbeispiel gemäß Fig. 2 dagegen durchdringt jeder Zuganker 30 zwar auch die zugehörige Durchgangsbohrung 33 im Maschinengestell 1, jedoch ist die Durchgangsbohrung 33 hier im Bereich des Zwischenbodens 3 mit einem Gewinde versehen, in dem der Zuganker 30 mit seinem am unteren Ende sitzenden Gewindezapfen 35 festgelegt ist.

Entsprechend einem weiteren Kriterium der Erfindung ist jeder Zuganker 21 bzw. 30 zumindest mit seinem am oberen Ende sitzenden Gewindezapfen 22 bzw. 34 über die Mutter 24 bzw. 36 hinaus verlängert und bildet mit diesem überstehenden Teil einen Tragsockel zum Ansetzen und Halten einer Zugankerspann- bzw. Mutterlösevorrichtung. Bei letzterer handelt es sich um ein hydraulisch betätigbares Spezialwerkzeug, das in der Regel zusammen mit der Maschine an einen Kunden ausgeliefert wird.

**Bezugszeichenliste**

1 Maschinengestell
2 Obergurt an 1
3 Zwischenboden
4 Unterseite von 3
5 Kurbelwelle

6 Lagerdeckel
7 Grundplatte von 1
8 Anlagefläche seitlich an 1
9 " " " "
10 " " " "
11 " " " "
12 obere Kurbelwellenlagerhälfte
13 obere Anlagefläche an 1
14 " " " "
15 Seitenfläche an 6
16 " " " "
17 Oberseite von 6
18 untere Kurbelwellenlagerhälfte
19 Durchgangsbohrung in 1
20 " " " " " " " " " 6
21 Zuganker
22 Gewindezapfen
23 " " " "
24 Mutter auf 22
25 Mutter auf 23
26 Anlagefläche an 1 für 24
27 Anlagefläche an 6 für 25
28 Zylinderbuchsen
29 Zylinderköpfe
30 Zuganker
31 Durchgangsbohrung in 29 für 30
32 Durchgangsbohrung in 28 für 30
33 Durchgangsbohrung in 1 für 30
34 Gewindezapfen oben an 30
35 Gewindezapfen unten an 30
36 Muttern
37 Anlagefläche an Oberseite von 29
38 Muttern

**Patentansprüche**

1. Hubkolbenbrennkraftmaschine, deren Zylinderbuchsen (28) einen Zylinderbohrungsdurchmesser von 400 mm und mehr besitzen und deren Kolben über Pleuel an einer Kurbelwelle (5) angelenkt sind, die hängend über von unten her angesetzte Lagerdeckel (6) an einem einteilig gegossenen Maschinengestell (1) gelagert ist, wobei die Lagerdeckel (6) Durchgangsbohrungen (20) zur Hindurchführung von Zugankern (21) für ihre Festlegung am Maschinengestell (1) aufweisen und wobei die Zylinderbuchsen (28) durch oben aufgesetzte Zylinderköpfe (29) über Durchgangsbohrungen (31) durchdringende, zumindest an ihren oberen Enden auf Gewindezapfen (34) Muttern (36) tragende Zuganker (30) am Maschinengestell (1) festgelegt sind, gekennzeichnet durch die Kombination folgender Merkmale:
a) das einteilige Maschinengestell (1) ist aus einfachem Grauguß (GG 25 oder GG 20) gegossen,
b) das einteilige Maschinengestell (1) weist für die Befestigung der Lagerdeckel (6) zu deren Durchgangsbohrungen (20) fluchtende Durchgangsbohrungen (19) für eine Hindurchführung von entsprechend langen Zugankern (21) auf, welche die keine Gewinde aufweisenden Durchgangsbohrungen (19, 20) vollständig durchdringen und an jedem Ende auf einem Gewindezapfen (22, 23) je eine Mutter (24, 25) tragen, von denen sich die eine (24) an einer entsprechenden Anlagefläche (26) an der Oberseite des Maschinengestells (1) und die andere (25) an der Unterseite (27) eines Lagerdeckels (6) abstützt,
c) das einteilige Maschinengestell (1) weist etwa in Höhe seiner biegeneutralen Zone einen Zwischenboden (3) auf, an dem die zu einem Zylinderkopf (29) führenden Zuganker (30) mit ihren unteren Enden festgelegt sind,
d) alle Zuganker (21; 30) sind zumindest mit ihren an den oberen Enden angeordneten Gewindezapfen (22; 34) über die Muttern (24; 36) hinaus verlängert und bilden mit diesem überstehenden Teil einen Tragsockel zum Ansetzen und Halten einer Zugankerspann- bzw. Mutterlösevorrichtung.

2. Hubkolbenbrennkraftmaschine nach Anspruch 1, dadurch gekennzeichnet, daß die zu den Zylinderköpfen (29) führenden Zuganker (30) mit ihren am unteren Ende gegebenen Gewindezapfen (35) Durchgangsbohrungen (33) im Zwischenboden (3) durchdringen und über sich an der Zwischenbodenunterseite (4) abstützende Muttern (38) axial festgelegt sind.

3. Hubkolbenbrennkraftmaschine nach Anspruch 1, dadurch gekennzeichnet, daß die zu den Zylinderköpfen (29) führenden Zuganker (30) mit ihren am unteren Ende gegebenen Gewindezapfen (35) in den Zwischenboden (3) durchdringenden Gewindebohrungen (33) axial festgelegt sind.

**Claims**

1. Reciprocating piston internal combustion engine, the cylinder linings (28) of which have a cylinder bore diameter of 400 mm and more and whose pistons are articulated on a crankshaft (5) by means of connecting rods, the crankshaft being mounted in a machine frame (1) cast in one piece, and carried by bearing caps (6) fixed from below, wherein the bearing caps (6) have through-holes (20) for passing tie rods (21) through to secure them to the machine frame (1) and wherein the cylinder linings (28) are fixed on the machine frame (1) by tie rods (30) carrying nuts (36) on threaded shanks (34) at least on their upper ends and penetrating, by means of through-holes (31), cylinder heads (29) fixed on top, characterised by the combination of the following features:
a) the one-piece machine frame (1) is cast from simple grey cast iron (GG25 or GG20)
b) for securing the bearing caps (6) the one-piece machine frame (1) has through-holes (19) in alignment with their through-holes (20) for passing through correspondingly long tie rods (21) which completely penetrate the through-holes (19, 20) not having any thread, and at each end respectively carry a nut (24, 25) on a threaded shank (22, 23), one of which nuts (24) is supported on a corresponding contact surface (26) on the upper side of the machine frame (1), and the other of which (25) is supported on the lower side (27) of a bearing cap (6),

c) the one-piece machine frame (1) has an intermediate partition (3) approximately on a level with its neutral bending zone, on which the tie rods (30) leading to a cylinder head (29) are fixed with their lower ends,

d) all the tie rods (21; 30) extend beyond the nuts (24; 36) at least with their threaded shanks (22; 34) arranged at the upper ends, and with this projecting part form a supporting upstand for fixing and retaining a tie rod clamping- or nut-loosening device.

2. Reciprocating piston internal combustion engine according to claim 1, characterised in that the tie rods (30) leading to the cylinder heads (29) penetrate through-holes (33) in the intermediate partition (3) with their threaded shanks (35) provided at the lower end, and are axially secured by means of nuts (38) supported on the underside (4) of the intermediate partition.

3. Reciprocating piston internal combustion engine according to claim 1, characterised in that the tie rods (30) leading to the cylinder heads (29) are axially secured in threaded bores (33), penetrating the intermediate partition (3), with their threaded shanks (35) provided at the lower end.

**Revendications**

1. Moteur à combustion interne à pistons alternatifs dont les cylindres (28) possèdent un diamètre d'alésage de cylindre de 400 mm ou plus et dont les pistons sont articulés par l'intermédiaire de bielles sur un vilebrequin (5) qui est monté suspendu à un bâti de moteur (1) coulé en une seule pièce par l'intermédiaire de chapeaux de paliers (6) montés par dessous, les chapeaux de paliers (6) présentant des perçages traversants (20) pour le passage de tirants (21) servant à les fixer au bâti (1) du moteur, et dans lequel les cylindres (28) sont fixés au bâti (1) du moteur par des tirants (30) qui traversent des culasses (29) montées au-dessus, en passant dans des perçages traversants (31), et qui portent, au moins à leurs extrémités supérieures, des écrous (36) sur des tétons filetés (34), caractérisé par la combinaison de caractéristiques suivantes:

a) le bâti en une seule pièce (1) du moteur est coulé en fonte grise simple (désignation allemande GG 25 ou GG 20);

b) le bâti en une seule pièce (1) du moteur présente, pour la fixation des chapeaux de paliers (26), des perçages traversants (19) alignés sur les perçages traversants (20) de ces chapeaux, et donnant passage à des tirants (21) d'une longueur appropriée, qui traversent entièrement les perçages traversants (19, 20), dépourvus de filetages, et qui portent, à chaque extrémité, sur un téton fileté (22, 23), un écrou (24, 25), dont l'un (24) s'appuie contre une surface de portée correspondante (26) située sur la face supérieure du bâti (1) du moteur et l'autre contre la face inférieure (27) d'un chapeau de palier (6);

c) le bâti en une seule pièce (1) du moteur, présente, à peu près au niveau de sa zone neutre à la flexion, un plancher intermédiaire (3) auquel les tirants (30) aboutissant à une culasse (29) sont fixés par leurs extrémités inférieures;

d) tous les tirants (21; 30) sont prolongés, du moins par leurs tétons filetés (22, 34) prevus a leurs extrémités supérieures, au-delà des écrous (24; 36), et ils forment avec cette partie débordante un embout de portée sur lequel peut être monté et tenu un dispositif de tension du tirant ou de desserrage de l'écrou.

2. Moteur à combustion interne à pistons alternatifs selon la revendication 1, caractérisé en ce que les tirants (30) qui aboutissent aux culasses (29) traversent, par leur téton fileté (35) situé à l'extrémité inférieure, des perçages traversants (33) ménagés dans le plancher intermédiaire (3) et sont fixés axialement par des écrous (38) qui prennent appui contre la face inférieure (4) du plancher intermédiaire.

3. Moteur à combustion interne selon la revendication 1, caractérisé en ce que les tirants (30) qui aboutissent aux culasses (29) sont fixés axialement par leur téton fileté (35) prévu à l'extrémité inférieure, dans des perçages filetés (33) qui traversent le plancher intermédiaire (3).

Fig.1

Fig.2